# EUROPÄISCHE PATENTANMELDUNG

(11) **EP 3 840 162 A1**
(43) Veröffentlichungstag der Anmeldung: **23.06.2021**
(21) Anmeldenummer: 19216951.4
(22) Anmeldetag: 17.12.2019
(51) Int. Cl.: H02J 3/38, H02J 3/40

(54) **ERZEUGEREINHEIT UND BETRIEBSVERFAHREN FÜR DIE ERZEUGEREINHEIT**

(71) Anmelder: Siemens Aktiengesellschaft, 80333 München (DE)
(72) Erfinder: Döbler, Fabian, 91710 Gunzenhausen (DE); Fromme, Christopher, 90763 Fürth (DE)

(57) **Zusammenfassung**

Für die Synchronisation der Erzeugereinheit in einem Inselnetz moduliert ein netzbildender Erzeugereinheit ein Synchronisationssignal auf die erzeugte Wechselspannung auf. Die weiteren Erzeugereinheit synchronisieren die von ihnen erzeugte Wechselspannung an dem Synchronisationssignal.

## Beschreibung

Die Erfindung betrifft eine ein- oder mehrphasige Erzeugereinheit zur Einspeisung elektrischer Energie in ein elektrisches Energieverteilnetz und ein Betriebsverfahren für die Erzeugereinheit. Weiterhin betrifft die Erfindung ein elektrisches Energieverteilnetz und ein Betriebsverfahren für das elektrische Energieverteilnetz.

Erzeugereinheiten, die elektrische Energie in ein Energieverteilnetz einspeisen sollen, teilen sich auf in netzbildende Erzeugereinheiten und netzspeisende Erzeugereinheiten. Die netzbildenden Erzeugereinheiten legen die Phasenlage der Wechselspannung fest und stabilisieren diese, soweit das möglich ist. Netzspeisende Erzeugereinheiten müssen dafür sorgen, dass die Phasenlage der von ihnen erzeugten Wechselspannung mit derjenigen der Spannung im Energieverteilnetz übereinstimmt.

Ein- oder mehrphasige netzgeführte Umrichter synchronisieren sich dafür auf die gemessene Netzspannung am Anschlusspunkt, um dann Energie mit dem Energieverteilnetz auszutauschen. Dabei ist es wichtig, dass der Umrichter die Netzgrößen wie Frequenz, Spannungsamplitude und Phasenverschiebung am Anschlusspunkt höchstens geringfügig beeinflusst, d.h. es wird ein starres Netz benötigt. Dies ist so lange der Fall, wie die Leistung des Umrichters deutlich kleiner ist als die des Energieverteilnetzes. Bei einem starren Energieverteilnetz stabilisieren große Generatoren, aber auch große netzbildende Umrichter das Netz.

Bei Inselnetzen ist es jedoch oftmals der Fall, dass die verschiedenen angeschlossenen Erzeugereinheiten wie beispielsweise Dieselgeneratoren, Windkraftanlagen oder PV-Anlagen eine ähnliche Anschlussleistung haben. Erzeugt nun der Dieselgenerator ein Netz und die Windkraft- und PV-Anlage synchronisieren sich auf und speisen jeweils mit voller Leistung in das Energieverteilnetz ein, kann der netzbildende Dieselgenerator die Leistungsbilanz im Netz nicht auf 0 W ausregeln. Es kommt in der Folge zum Anstieg der Spannungsamplitude, zur Änderung der Frequenz und somit zu einem instabilen Netz, was nachteiligerweise zur Abschaltung des Systems führt.

Sollen Erzeugereinheiten ähnlicher Leistung ein Netz erzeugen, ist es daher möglich, dass alle Erzeugereinheiten als netzbildende Erzeugereinheiten auftreten. Die Synchronisation der Erzeugereinheiten kann anhand eines Datenaustauschs zwischen den Erzeugereinheiten über eine dafür geeignete Kommunikationsverbindung stattfinden. Bei diesem Datenaustausch ist es wichtig, geringe Laufzeiten zu gewährleisten und somit Verschiebungen zwischen den erzeugten Ausgangsspannungen zu vermeiden.

Aufgabe der vorliegenden Erfindung ist es, eine Erzeugereinheit und ein Betriebsverfahren für die Erzeugereinheit anzugeben, die die eingangs genannten Nachteile vermeiden oder verringern.

Diese Aufgabe wird durch Erzeugereinheiten mit den Merkmalen von Anspruch 1 und Anspruch 2 gelöst. Hinsichtlich des Betriebsverfahrens bestehen Lösungen in den Verfahren gemäß Anspruch 9 und 10.

Eine erste erfindungsgemäße Erzeugereinheit zur Einspeisung von ein- oder mehrphasiger Wechselspannung in ein Energieverteilnetz ist ausgestaltet zur Aufmodulation eines Synchronisationssignals auf den Spannungsverlauf wenigstens einer der Phasen der erzeugten Wechselspannung.

Dabei ist das Synchronisationssignal derart gebildet, dass es eine Synchronisation einer in einer weiteren Erzeugereinheit erzeugten Wechselspannung mit der in der Erzeugereinheit selbst erzeugten Wechselspannung ermöglicht, indem dem Synchronisationssignal eine feste Phasenlage in der Wechselspannung zugeordnet ist und das Synchronisationssignal mit der Frequenz der Wechselspannung oder einem ganzzahligen Teil dieser Frequenz wiederholt wird, oder indem das Synchronisationssignal die Phasenlage in der Wechselspannung als kodierte Daten enthält.

Die Erzeugereinheit ist ausgestaltet, die Wechselspannung so an das Synchronisationssignal angepasst zu erzeugen, dass die Phasenlage des Synchronisationssignals der festen Phasenlage oder der als kodierte Daten übertragenen Phasenlage in der Wechselspannung entspricht.

Eine zweite erfindungsgemäße Erzeugereinheit zur Einspeisung elektrischer Energie in ein ein- oder mehrphasiges Energieverteilnetz umfasst eine Demodulationseinrichtung zur Entnahme eines Synchronisationssignals aus dem Spannungsverlauf wenigstens einer der Phasen der Wechselspannung im Energieverteilnetz.

Dabei ist wie bei der ersten Erzeugereinheit das Synchronisationssignal derart gebildet, dass es eine Synchronisation einer in einer weiteren Erzeugereinheit erzeugten Wechselspannung mit der in der Erzeugereinheit erzeugten Wechselspannung ermöglicht, indem dem Synchronisationssignal eine feste Phasenlage in der Wechselspannung zugeordnet ist und das Synchronisationssignal mit der Frequenz der Wechselspannung oder einem ganzzahligen Teil dieser Frequenz wiederholt wird, oder indem das Synchronisationssignal die Phasenlage in der Wechselspannung als kodierte Daten enthält.

Die zweite Erzeugereinheit ist ferner ebenso wie die erste Erzeugereinheit ausgestaltet, die Wechselspannung so an das Synchronisationssignal angepasst zu erzeugen, dass die Phasenlage des Synchronisationssignals der festen Phasenlage oder der als kodierte Daten übertragenen Phasenlage in der Wechselspannung entspricht.

Bei dem ersten erfindungsgemäßen Betriebsverfahren für eine Erzeugereinheit, die an ein ein- oder mehrphasiges Energieverteilnetz angeschlossen ist dort Energie einspeist, moduliert die Erzeugereinheit bei wenigstens einer der Phasen der Wechselspannung ein Synchronisationssignal auf den Spannungsverlauf auf, wobei ein Synchronisationssignal verwendet wird, das eine Synchronisation einer in einer anderen Erzeugereinheit erzeugten Wechselspannung mit der in der ersten Erzeugereinheit erzeugten Wechselspannung ermöglicht, indem dem Synchronisationssignal eine feste Phasenlage in der Wechselspannung zugeordnet wird und das Synchronisationssignal mit der Frequenz der Wechselspannung oder einem ganzzahligen Teil dieser Frequenz wiederholt wird, oder indem das Synchronisationssignal die Phasenlage in der Wechselspannung als kodierte Daten enthält.

Weiterhin passt die Erzeugereinheit die Phasenlage der erzeugten Wechselspannung an das Synchronisationssignal so an, dass die Phasenlage des Synchronisationssignals der festen Phasenlage oder der als kodierte Daten übertragenen Phasenlage in der Wechselspannung entspricht.

Bei dem zweiten erfindungsgemäßen Betriebsverfahren für eine Erzeugereinheit, die an ein ein- oder mehrphasiges Energieverteilnetz angeschlossen ist und dort Energie einspeist,, nimmt die Erzeugereinheit ein Synchronisationssignal auf, das auf den Spannungsverlauf im Energieverteilnetz aufmoduliert ist, wobei ein Synchronisationssignal verwendet wird, das eine Synchronisation einer in einer anderen Erzeugereinheit erzeugten Wechselspannung mit der in der ersten Erzeugereinheit erzeugten Wechselspannung ermöglicht, indem dem Synchronisationssignal eine feste Phasenlage in der Wechselspannung zugeordnet wird und das Synchronisationssignal mit der Frequenz der Wechselspannung oder einem ganzzahligen Teil dieser Frequenz wiederholt wird, oder indem das Synchronisationssignal die Phasenlage in der Wechselspannung als kodierte Daten enthält.

Weiterhin passt die Erzeugereinheit die Phasenlage der erzeugten Wechselspannung an das Synchronisationssignal so an, dass die Phasenlage des Synchronisationssignals der festen Phasenlage oder der als kodierte Daten übertragenen Phasenlage in der Wechselspannung entspricht.

Sowohl bei den Erzeugereinheiten als auch bei den Betriebsverfahren gliedern sich die erfindungsgemäßen Erzeugereinheiten also in Sender und Empfänger oder in anderen Worten Master und Slaves. Sender und Empfänger wirken dabei zusammen, um den Vorteil der Erfindung zu bewirken.

Sowohl bei den Erzeugereinheiten als auch bei den Betriebsverfahren wird also die Wechselspannung stets so erzeugt, dass ihre Lage an das Synchronisationssignal angepasst ist, nicht etwa umgekehrt. Das Synchronisationssignal, das zweckmäßig mit einem von der Wechselspannung unabhängigen Taktgeber erzeugt wird, stellt also die Basis für die Synchronisation dar, und das auch bei denjenigen Erzeugereinheiten, die das Synchronisationssignal selbst erzeugen. Auch bei diesen wird also nicht das Synchronisationssignal an den Wechselspannungsverlauf angepasst, sondern umgekehrt.

Die Erzeugereinheiten passen die Phasenlage der erzeugten Wechselspannung also mit anderen Worten an die zeitliche Lage des Synchronisationssignals an. Da die zeitliche Lage des Synchronisationssignals wie bereits beschrieben nicht von der Phasenlage irgendeiner erzeugten Wechselspannung abhängt, findet auch keine Rückkopplung statt, bei der eine der Erzeugereinheiten die Lage des Synchronisationssignals verändert und somit das Energieverteilnetz instabil macht. Während also das Netz für jede der Erzeugereinheiten nicht starr sein mag, ist die Lage des Synchronisationssignals starr. Damit ist eine sichere Basis für die Synchronisation geschaffen und ein Energieverteilnetz kann stabil betrieben werden, obwohl alle Erzeugereinheiten ähnliche Leistungen haben. Weiterhin ist auch vorteilhaft, dass ein zusätzlicher Kommunikationskanal abseits der Stromleitungen nicht notwendig ist.

Vorteilhafte Ausgestaltungen von den Erzeugereinheiten und Betriebsverfahren gehen aus den von Anspruch 1 und 2, 10 und 11 abhängigen Ansprüchen hervor. Dabei kann die Ausführungsform nach einem der unabhängigen Ansprüche mit den Merkmalen eines der Unteransprüche oder vorzugsweise auch mit denen aus mehreren Unteransprüchen kombiniert werden. Demgemäß können für die Erzeugereinheit und die Betriebsverfahren noch zusätzlich folgende Merkmale vorhanden sein:
- Das Synchronisationssignal kann mit einem ganzzahligen Vielfachen der Netzfrequenz wiederholt werden. Die Netzfrequenz beträgt in den meisten Fällen 50 Hz oder 60 Hz. Bei dieser Ausgestaltung wird mit anderen Worten mehrfach pro Netzperiode das Synchronisationssignal aufmoduliert. Die Lage der mehreren Synchronisationssignale pro Netzperiode ist aber konstant; ändert sich also zwischen den Netzperioden nicht. Dadurch ist eine Synchronisation mit erhöhter Genauigkeit möglich.
- Bei der vorstehenden Ausgestaltung ist es zweckmäßig, wenn die Erzeugereinheiten weiterhin eine eindeutige Phasenlage aus dem Synchronisationssignal ableiten können, auch wenn die Synchronisationssignale mehrfach pro Netzperiode vorkommen. Dazu können sich die Synchronisationssignale innerhalb einer Netzperiode unterscheiden; beispielsweise kann das erste der auftretenden Synchronisationssignale anders gestaltet sein als die weiteren Synchronisationssignale einer Netzperiode. Es kann länger oder kürzer sein oder einen größeren Spannungshub aufweisen. Eine weitere Möglichkeit ist, dass die Synchronisationssignale innerhalb einer Netzperiode nicht gleichmäßig verteilt sind, also keine gleichartigen Winkelabstände zueinander aufweisen. Beispielsweise können für vier Synchronisationssignale die Phasenlagen 30°, 60°, 120°, 240° verwendet werden. Dadurch ist die Lage der Synchronisationssignale in der Netzperiode eindeutig, auch wenn die Synchronisationssignale selbst völlig gleichartig sind.
- Das Synchronisationssignal kann auf alle Phasen der erzeugten Wechselspannung aufmoduliert werden. Hierdurch wird ebenfalls eine verbesserte Genauigkeit der Synchronisation erreicht. Hier ist es wie bei den vorangehend beschriebenen Ausgestaltungen zweckmäßig, dass die Lage der Wechselspannung eindeutig erkennbar ist, indem die Synchronisationssignale sich voneinander unterscheiden oder indem die Erzeugereinheiten erkennen können, welches Synchronisationssignal welcher Phase angehört.
- Das Synchronisationssignal ist bevorzugt ein Spannungspuls einer Länge von höchstens 1 %, insbesondere höchstens 0,1 % der Periodendauer der Wechselspannung, der eine Stärke von höchstens 1 %, insbesondere höchstens 0,2 % der Nennspannung des Netzes aufweist. Mit diesen Werten beeinflusst das Synchronisationssignal die Wechselspannung nur unwesentlich. Das Synchronisationssignal kann beispielsweise ein Spannungspuls einer Länge von höchstens 100 µs, insbesondere höchstens 10 µs Dauer sein, der eine Stärke von höchstens 5 V, insbesondere höchstens 1 V aufweist. Mit diesen Werten beeinflusst das Synchronisationssignal die Wechselspannung nur unwesentlich.
- Das Synchronisationssignal ist bevorzugt unveränderlich. Mit anderen Worten bleibt es auch über viele Netzperioden hinweg gleichartig. Werden in einer Netzperiode mehrere Synchronisationssignale verwendet, können diese sich voneinander unterscheiden. In diesem Fall wiederholt sich aber die Gesamtheit der Synchronisationssignale einer Netzperiode in den späteren Netzperioden.
- Die Erzeugereinheiten können ein Kraftwerk, einen Dieselgenerator, ein Wind- oder Solarkraftwerk und/oder einen elektrischen Energiespeicher umfassen.
- Eine Erzeugereinheit kann sowohl als erste als auch als zweite Erzeugereinheit aufgebaut und ausgestaltet sein. Sie kann dann vorteilhaft als Master auftreten und das Synchronisationssignal erzeugen und aufmodulieren als auch als Slave und das Synchronisationssignal aus dem Energieverteilnetz verwenden. Dann ist es vorteilhaft, wenn die Erzeugereinheit zwei Betriebsmodi verwendet. Im ersten Betriebsmodus arbeitet die Erzeugereinheit als Slave. Bei Fehlen des Synchronisationssignals schaltet die Erzeugereinheit in den zweiten Betriebsmodus, bei dem sie als Master arbeitet. Dann wird das Synchronisationssignal durch die Erzeugereinheit selbst auf den Spannungsverlauf wenigstens einer der Phasen der erzeugten Wechselspannung aufmoduliert und die Erzeugereinheit tritt als Master auf. Dies erhöht die Ausfallsicherheit des Systems, da man nicht von einem einzelnen Master abhängig ist.
- Das Synchronisationssignal kann eine komplexere Signalform aufweisen, um besser und sicherer von Störungen unterscheidbar zu sein. Beispielsweise kann das Synchronisationssignal aus einer Folge von rechteckförmigen Signalen bestehen, beispielsweise rechteckförmige Signale mit einer Frequenz von 50 kHz mit einer Gesamtdauer von 200 µs. Dabei kann zur weiteren Verbesserung des Synchronisationssignals zwischen den einzelnen rechteckförmigen Pulsen die Signalhöhe verändert werden.
- Aus den vorgenannten Erzeugereinheiten und Verbrauchern kann ein elektrisches Energieverteilnetz aufgebaut werden. Dabei ist eine erste erfindungsgemäße Erzeugereinheit vorhanden und ein oder mehrere zweite Erzeugereinheiten. In diesem Energieverteilnetz bildet die erste Erzeugereinheit eine Art Master, ist also eine kontrollierende Erzeugereinheit, da von ihr das Synchronisationssignal ausgeht. Der oder die zweiten Erzeugereinheiten bilden Slaves, da sie das Synchronisationssignal aufnehmen. Auch die erste Erzeugereinheit, also der Master, muss sich bezüglich der Erzeugung ihrer Wechselspannung nach dem eigenen Synchronisationssignal richten.
- Alternativ kann in einem Energieverteilnetz neben den Erzeugereinheiten, die als Slave arbeiten, eine Einrichtung vorhanden sein, die ausgestaltet ist zur Aufmodulation eines Synchronisationssignals auf den Spannungsverlauf wenigstens einer der Phasen der Wechselspannung im Energieverteilnetz, wobei das Synchronisationssignal den bisher beschriebenen Vorgaben entspricht. Hier wird also mit anderen Worten das Synchronisationssignal nicht durch eine Erzeugereinheit wie einen Generator mit eingespeist, sondern durch ein extra dafür vorgesehenes Gerät, das unabhängig von den Generatoren arbeitet. In so einem Energieverteilnetz ist der Master also selbst keine Erzeugereinheit. In dieser Einrichtung können auch andere Funktionen wie die Netztrennung (ENS) integriert sein. Vorteilhaft wird dadurch vermieden, dass die Synchronisierung im Netz von genau einer der Erzeugereinheiten abhängt.

Weitere Vorteile und Merkmale sind der folgenden Beschreibung eines Ausführungsbeispiels anhand der Figuren zu entnehmen. Dabei zeigen schematisch:
Figur 1 ein Inselnetzwerk mit mehreren Erzeugereinheiten und Verbrauchern
Figuren 2 und 3 eine Phase einer erzeugten Wechselspannung mit einem Synchronisationssignal

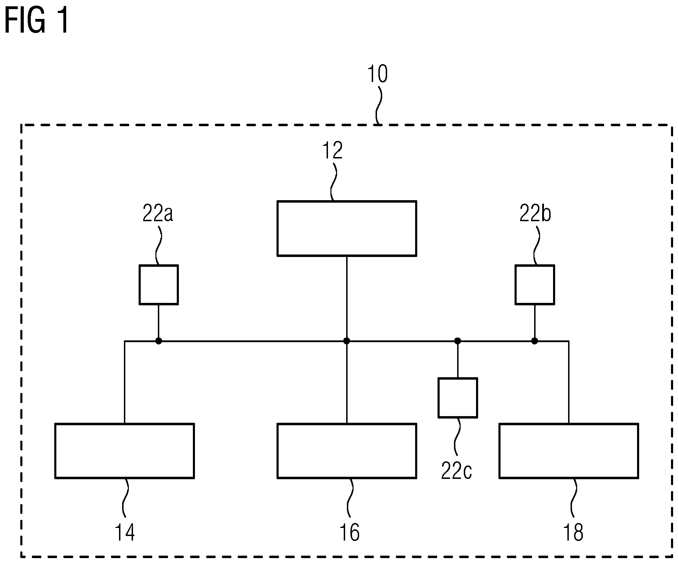

Figur 1 zeigt stark schematisiert ein Inselnetzwerk 10, also ein vom großflächigen öffentlichen Versorgungsnetzwerk abgetrenntes elektrisches Energieverteilnetz. Ein Beispiel für ein solches Inselnetzwerk 10 ist ein Energieverteilnetz in einer abgelegenen Gegend oder auf einer tatsächlichen Insel, das weitgehend von einem Dieselgenerator 12 als netzbildender Erzeugereinheit versorgt wird, bei dem aber auch Photovoltaik- 14, 16 oder Windanlagen 18 als Erzeugereinheiten dazukommen können. Ein weiteres Beispiel für ein solches Inselnetzwerk 10 ist ein Energieverteilnetz eines Gebäudes, das eine Notstromversorgung hat und vorübergehend vom Versorgungsnetzwerk getrennt ist; beispielsweise ein Krankhaus. Inselnetze 10 sind beispielsweise auch auf Schiffen vorhanden. Beispielhaft zeigt Figur 1 auch einige Verbraucher 22a...c, die an das Inselnetzwerk 10 angeschlossen sind.

Wie bei allen Netzen müssen alle Erzeugereinheiten auch im Inselnetzwerk 10 die Wechselspannung mit einer Phasenlage erzeugen, die synchronisiert ist mit der im Energieverteilnetz vorhanden Wechselspannung, also in Phasenlage und Amplitude übereinstimmt. Bei Abweichungen fließen erhebliche Ströme zwischen den Erzeugereinheiten und das Energieverteilnetz kann instabil werden, was im Ergebnis zu einer Abschaltung des gesamten Energieverteilnetzes führen kann.

Ist das Netz starr, dann kann eine Synchronisation der erzeugten Spannung schon anhand der vorhandenen Wechselspannung im Energieverteilnetz erfolgen, da eine Rückwirkung der zusätzlichen Einspeisung auf die Amplitude und Phase der Netzspannung praktisch nicht vorhanden ist.

Bei dem Inselnetzwerk 10 ist dagegen die netzbildende Erzeugereinheit ein Dieselgenerator 12 mit einer im Vergleich zu einem Kraftwerk geringen Leistung. Die in diesem Ausführungsbeispiel ebenfalls vorhandenen zwei Photovoltaik-Anlagen 14, 16 und die Windenergieanlage 18 haben maximale Leistungen, die in der gleichen Größenordnung wie die des Dieselgenerators 12 liegen. Versuchen daher eine oder gar mehrere der Photovoltaik-Anlagen 14, 16 oder die Windenergieanlage 18 eine Synchronisation anhand der Wechselspannung im Inselnetzwerk 10, dann beeinflussen sie die vorhandene Wechselspannung merklich und haben somit keine feste Referenz mehr für die Synchronisation. Dadurch würde das Inselnetzwerk 10 instabil und im schlimmsten Fall müsste das Energieverteilnetz abgeschaltet werden.

Um einen sicheren Betrieb des Inselnetzwerks 10 mit dem Dieselgenerator 12 als netzbildender Erzeugereinheit zu gewährleisten, umfasst der Dieselgenerator einen Modulator. Der Modulator fügt der erzeugten Wechselspannung ein Synchronisationssignal 32 zu. Der Modulator kann dabei eine zusätzliche Einrichtung sein, die das Synchronisationssignal 32 hinzufügt. Der Modulator kann aber auch in einer angepassten Steuerung für den ohnehin vorhandenen Wechselrichter bestehen, der durch eine veränderte Ansteuerung der Leistungshalbleiter im Wechselrichter das Synchronisationssignal 32 erzeugt.

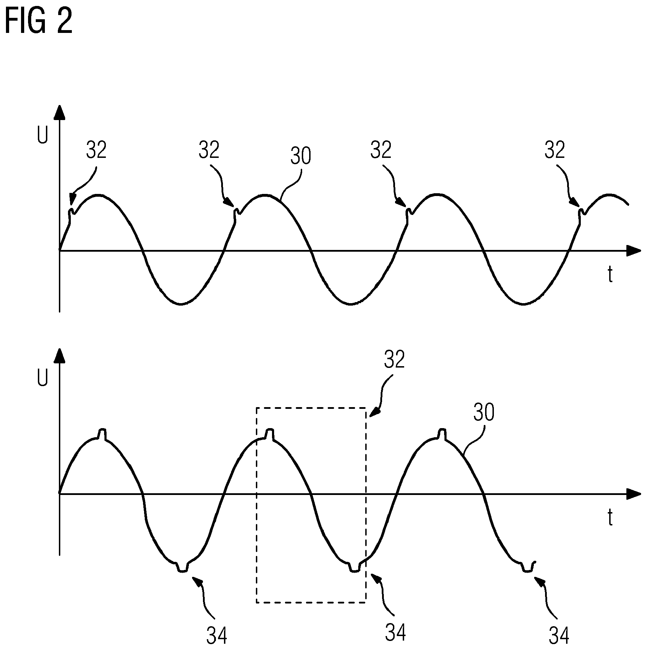

Das Synchronisationssignal 32 ist im Wesentlichen ein kurzer Spannungspuls von beispielsweise 5 µs Dauer mit einer Höhe von 1 V, der der erzeugten Wechselspannung überlagert wird. Beispiele für solche Synchronisationssignale sind in den Figuren 2 und 3 gezeigt. Die Figuren 2 und 3 zeigen qualitativ und nicht maßstabsgetreu eine Phase einer erzeugten Wechselspannung 30 mit verschiedenen Ausführungsmöglichkeiten für das Synchronisationssignal 32.

Im Beispiel der Figur 2 wird der Spannungspuls, der das Synchronisationssignal 32 bildet, mit der Netzfrequenz, also beispielsweise 50 Hz, in anderen Ausführungsbeispielen 60 Hz, erzeugt. Dabei ist das Synchronisationssignal 32 der Schwingung der Wechselspannung 30 überlagert. Das Synchronisationssignal 32 ist dabei in Figur 2 mit zu großer Amplitude und zu großer Dauer dargestellt. Real liegt die Amplitude des Synchronisationssignals 32 zweckmäßig im Bereich von 0,1 V bis 5 V, insbesondere zwischen 0,2 V und 1 V. Die Dauer des Synchronisationssignals 32 liegt zwischen 1 µs und 100 µs, insbesondere zwischen 2 µs und 10 µs.

Das Synchronisationssignal 32 und die beim Dieselgenerator 12 erzeugte Wechselspannung stehen in einer festen Phasenbeziehung. Beispielsweise kann für das Synchronisationssignal 32 vorgesehen sein, dass das Spannungsmaximum oder das Spannungsminimum oder ein Spannungs-Nulldurchgang mit positiver Steigung mit dem Synchronisationssignal 32 zusammenfällt. In Figur 2 liegt das Synchronisationssignal 32 ab einem Nulldurchgang der Spannung mit positiver Steigung bei etwa 30°.

Dabei stellt auch im Dieselgenerator 12 selbst das Synchronisationssignal 32 die Referenz dar, d.h. die im Dieselgenerator 12 erzeugte Spannung muss ebenfalls am Synchronisationssignal 32 ausgerichtet werden, nicht etwa umgekehrt. Das Synchronisationssignal 32 selbst muss also mit einem Taktgeber erzeugt werden, der von der erzeugten Wechselspannung unabhängig ist.

Figur 3 zeigt ein weiteres Beispiel für das Synchronisationssignal 32, das in diesem Fall mit dem Spannungsmaximum der Wechselspannung 30 zusammenfällt. In dem Beispiel gemäß Figur 3 ist ein weiterer Spannungspuls 34 vorhanden, der mit dem Spannungsminimum der Wechselspannung 30 zusammenfällt und im Gegensatz zum Spannungspuls im Spannungsmaximum eine negative Auslenkung der Wechselspannung bewirkt. Die Spannungspulse bilden zusammen das Synchronisationssignal 32. Dadurch, dass die Spannungspulse voneinander unterscheidbar sind, wird erreicht, dass die Phasenlage der Wechselspannung weiterhin eindeutig der Phasenlage des Synchronisationssignals 32 zugeordnet ist.

Die weiteren netzspeisenden Erzeugereinheiten, also in diesem Beispiel die Photovoltaik-Anlagen 14, 16 und die Windenergieanlage 18 sind mit einem Demodulator ausgestattet, der das Synchronisationssignal 32 aus der im Energieverteilnetz vorhandenen Wechselspannung extrahieren kann und somit die genaue zeitliche Lage feststellen kann. Die Wechselrichter der Photovoltaik-Anlagen 14, 16 und der Windenergieanlage 18 sind wiederum ausgestaltet, die erzeugte Wechselspannung am so extrahierten Synchronisationssignal 32 auszurichten, d.h. dieselbe feste Phasenbeziehung zwischen der Spannung und dem Synchronisationssignal 32 einzuhalten, die auch im Dieselgenerator 12 umgesetzt wird. Dazu ist es zweckmäßig, wenn alle Erzeugereinheit 14, 16, 18 die Phasenbeziehung kennen. Das kann beispielsweise durch manuelle Voreinstellung der Phasenbeziehung erfolgen oder auch durch ein Signal, das der Dieselgenerator 12 zu bestimmten Zeitpunkten auf die Wechselspannung aufmoduliert.

Durch die von der Spannung unabhängige Erzeugung, die Weitergabe und Verarbeitung des Synchronisationssignals 32 wird gewährleistet, dass die netzspeisenden Erzeugereinheiten 14, 16, 18 eine Wechselspannung erzeugen, die mit derjenigen der netzbildenden Erzeugereinheit, also des Dieselgenerators 12, synchronisiert ist. Die Synchronisierung funktioniert vorteilhaft auch dann, wenn eine Erzeugereinheit zugeschaltet wird, die eine ähnliche oder sogar eine größere Leistung als der netzbildende Dieselgenerator 12 hat. Weiterhin benötigt die Synchronisierung vorteilhaft keine eigene Datenleitung, sondern findet über das Energieverteilnetz selbst statt.

Wie in Figur 1 dargestellt, bilden die Erzeugereinheiten 12, 14, 16, 18 des Inselnetzwerks 10 zusammen eine Master-Slave-Struktur aus. Dabei stellt der Dieselgenerator 12 den Master dar, da dort das Synchronisationssignal 32 erzeugt wird. Die Photovoltaik-Anlagen 14, 16 und die Windenergieanlage 18 stellen die Slaves dar, da sie dem bereitgestellten Synchronisationssignal 32 folgen müssen.

In dem ersten Ausführungsbeispiel gemäß Figur 2 wird ein einzelner Spannungspuls als Synchronisationssignal 32 verwendet. Der Spannungspuls wird dabei mit der Netzfrequenz, also beispielsweise 50 Hz, aufmoduliert, tritt also in jeder Periode der Wechselspannung einmal auf. In alternativen Ausgestaltungen kann der Spannungspuls auch weniger häufig aufmoduliert werden, beispielsweise nur in jeder zweiten oder jeder fünften Spannungsperiode. Die Störung der Wechselspannung im Inselnetz durch das Synchronisationssignal 32 wird dadurch reduziert.

In wiederum anderen Ausführungsbeispielen wie dem der Figur 3 wird der Spannungspuls häufiger als einmal pro Spannungsperiode aufmoduliert. Dadurch kann die Genauigkeit der Synchronisierung erhöht werden. In diesem Fall ist es sinnvoll, wenn sich die Spannungspulse voneinander unterscheiden, um eine eindeutige Phasenlage ermitteln zu können. So kann beispielsweise ein erster Typ von Spannungspuls einmalig pro Spannungsperiode verwendet werden und weitere Spannungspulse eines zweiten Typs, der eine andere Form hat, beispielsweise kürzer ist als der erste Typ, mehrfach pro Spannungsperiode.

Beispielsweise kann ein Spannungspuls in Abständen von 60° aufmoduliert werden, wobei jeder sechste Spannungspuls einer des ersten Typs ist.

In einer weiteren alternativen Ausgestaltung wird ein Synchronisationssignal 32 verwendet, das nicht aus einem einfachen Spannungspuls besteht, sondern vielmehr Daten anhand eines festlegbaren Protokolls kodiert. Dadurch ist es möglich, dass das Synchronisationssignal 32 Daten zu den anderen Erzeugereinheiten 14, 16, 18 überträgt.

Solche Daten können beispielsweise die aktuelle Phasenlage relativ zur idealen Lage der erzeugten und zu erzeugenden Wechselspannung umfassen. Damit wird vorteilhaft vermieden, dass die Phasenlage des Synchronisationssignals 32 auf irgendeine andere Weise an die Erzeugereinheit 14, 16, 18 übertragen werden muss oder manuell eingestellt werden muss.

Dabei ist es möglich, dass das Synchronisationssignal 32 nicht mehr punktuell, sondern vielmehr kontinuierlich aufmoduliert und übertragen wird und somit kontinuierlich eine Information zur richtigen Phasenlage für die anderen Erzeugereinheiten 14, 16, 18 vorliegt.

Weiterhin können auch andere Daten auf diese Weise übertragen werden. Beispielsweise kann ein Spannungswert mit dem Synchronisationssignal 32 übertragen werden. Dadurch ist es möglich, dass die netzbildende Erzeugereinheit das gewünschte Spannungsniveau im Inselnetzwerk 10 verändert und die netzspeisenden Erzeugereinheiten diese Änderung ebenso umsetzen. Beispielsweise kann so das Spannungsniveau angehoben werden und somit ein Spannungsabfall zwischen Erzeugereinheiten und bestimmten Verbrauchern, die beispielsweise weit weg von den Erzeugereinheiten liegen, ausgeglichen werden.

### Bezugszeichen-Liste

- 10: Inselnetzwerk
- 12: Dieselgenerator
- 14, 16: Photovoltaik-Anlagen
- 18: Windenergie-Anlage
- 22a...c: Verbraucher
- 30: Wechselspannung
- 32: Synchronisationssignal
- 34: Spannungspuls

## Patentansprüche

1. Erste ein- oder mehrphasige Erzeugereinheit (12) zur Einspeisung elektrischer Energie in ein elektrisches Energieverteilnetz (10), ausgestaltet zur Aufmodulation eines Synchronisationssignals (32) auf den Spannungsverlauf (30) wenigstens einer der Phasen der erzeugten Wechselspannung, wobei
- das Synchronisationssignal (32) derart gebildet ist, dass es eine Synchronisation einer in einer weiteren Erzeugereinheit (12, 14, 16, 18) erzeugten Wechselspannung mit der in der ersten Erzeugereinheit (12) erzeugten Wechselspannung ermöglicht, indem dem Synchronisationssignal (32) eine feste Phasenlage in der Wechselspannung zugeordnet ist und das Synchronisationssignal (32) mit der Frequenz der Wechselspannung oder einem ganzzahligen Teil dieser Frequenz wiederholt wird, oder indem das Synchronisationssignal (32) die Phasenlage in der Wechselspannung als kodierte Daten enthält, und
- der erste Erzeugereinheit (12) ausgestaltet ist, die Wechselspannung so an das Synchronisationssignal (32) angepasst zu erzeugen, dass die Phasenlage des Synchronisationssignals (32) der festen Phasenlage oder der als kodierte Daten übertragenen Phasenlage in der Wechselspannung entspricht.

2. Zweite ein- oder mehrphasige Erzeugereinheit (14, 16, 18) zur Einspeisung elektrischer Energie in ein elektrisches Energieverteilnetz, umfassend eine Demodulationseinrichtung zur Entnahme eines Synchronisationssignals aus dem Spannungsverlauf wenigstens einer der Phasen der Wechselspannung im Energieverteilnetz, wobei
- das Synchronisationssignal (32) derart gebildet ist, dass es eine Synchronisation einer in einer weiteren Erzeugereinheit (12, 14, 16, 18) erzeugten Wechselspannung mit der in der ersten Erzeugereinheit (12) erzeugten Wechselspannung ermöglicht, indem dem Synchronisationssignal (32) eine feste Phasenlage in der Wechselspannung zugeordnet ist und das Synchronisationssignal (32) mit der Frequenz der Wechselspannung oder einem ganzzahligen Teil dieser Frequenz wiederholt wird, oder indem das Synchronisationssignal (32) die Phasenlage in der Wechselspannung als kodierte Daten enthält, und
- der zweite Erzeugereinheit (12) ausgestaltet ist, die Wechselspannung so an das Synchronisationssignal (32) angepasst zu erzeugen, dass die Phasenlage des Synchronisationssignals (32) der festen Phasenlage oder der als kodierte Daten übertragenen Phasenlage in der Wechselspannung entspricht.

3. Erzeugereinheit (12, 14, 16, 18) nach einem der vorangehenden Ansprüche, wobei das Synchronisationssignal (32) mit einem ganzzahligen Vielfachen der Frequenz der Wechselspannung wiederholt wird.

4. Erzeugereinheit (12, 14, 16, 18) nach einem der vorangehenden Ansprüche, derart ausgestaltet, dass das Synchronisationssignal auf alle Phasen der erzeugten Wechselspannung aufmoduliert wird.

5. Erzeugereinheit (12, 14, 16, 18) nach einem der vorangehenden Ansprüche, bei dem das Synchronisationssignal ein Spannungspuls einer Länge von höchstens 1 %, insbesondere höchstens 0,1 % der Periodendauer der Wechselspannung ist, insbesondere höchstens 200 µs, der eine Stärke von höchstens 1 %, insbesondere höchstens 0,2 % der Nennspannung des Energieverteilnetzes aufweist, insbesondere höchstens 5 V.

6. Erzeugereinheit (12, 14, 16, 18) nach einem der vorangehenden Ansprüche, bei dem das Synchronisationssignal unveränderlich ist.

7. Erzeugereinheit (12, 14, 16, 18) nach einem der vorangehenden Ansprüche, die ein Kraftwerk, einen Dieselgenerator, ein Wind- oder Solarkraftwerk und/oder einen elektrischen Energiespeicher umfasst.

8. Erzeugereinheit (14, 16, 18) nach Anspruch 1 und Anspruch 2, derart ausgestaltet, dass bei Fehlen eines Synchronisationssignals das Synchronisationssignal durch die Erzeugereinheit auf den Spannungsverlauf (30) wenigstens einer der Phasen der erzeugten Wechselspannung aufmoduliert wird.

9. Energieverteilnetz mit wenigstens einer Erzeugereinheit (14, 16, 18) nach Anspruch 2 und mit einer Einrichtung, ausgestaltet zur Aufmodulation eines Synchronisationssignals (32) auf den Spannungsverlauf (30) wenigstens einer der Phasen der Wechselspannung im Energieverteilnetz, wobei dem Synchronisationssignal (32) eine feste Phasenlage in der Wechselspannung zugeordnet ist und das Synchronisationssignal (32) mit der Frequenz der Wechselspannung oder einem ganzzahligen Teil dieser Frequenz wiederholt wird, oder indem das Synchronisationssignal (32) die Phasenlage in der Wechselspannung als kodierte Daten enthält.

10. Energieverteilnetz nach Anspruch 9, bei der die Einrichtung eine Erzeugereinheit (12) nach Anspruch 1 ist.

11. Betriebsverfahren für eine erste ein- oder mehrphasige Erzeugereinheit (12), die an ein elektrisches Energieverteilnetz (10) angeschlossen ist und elektrische Energie in das Energieverteilnetz (10) einspeist, bei dem
- die erste Erzeugereinheit (12) bei wenigstens einer der Phasen der Wechselspannung ein Synchronisationssignal (32) auf den Spannungsverlauf aufmoduliert, wobei ein Synchronisationssignal (32) verwendet wird, das eine Synchronisation einer in einer anderen Erzeugereinheit (12, 14, 16, 18) erzeugten Wechselspannung mit der in der ersten Erzeugereinheit (12) erzeugten Wechselspannung ermöglicht, indem dem Synchronisationssignal (32) eine feste Phasenlage in der Wechselspannung zugeordnet wird und das Synchronisationssignal (32) mit der Frequenz der Wechselspannung oder einem ganzzahligen Teil dieser Frequenz wiederholt wird, oder indem das Synchronisationssignal (32) die Phasenlage in der Wechselspannung als kodierte Daten enthält, und
- die erste Erzeugereinheit (12) die Phasenlage der erzeugten Wechselspannung an das Synchronisationssignal (32) so anpasst, dass die Phasenlage des Synchronisationssignals der festen Phasenlage oder der als kodierte Daten übertragenen Phasenlage in der Wechselspannung entspricht.

12. Betriebsverfahren für eine zweite ein- oder mehrphasige Erzeugereinheit (14, 16, 18), die an ein Energieverteilnetz (10) angeschlossen ist und elektrische Energie in das Energieverteilnetz (10) einspeist, bei dem
- die zweite Erzeugereinheit (14, 16, 18) ein Synchronisationssignal aufnimmt, das auf den Spannungsverlauf im Energieverteilnetz aufmoduliert ist, wobei ein Synchronisationssignal (32) verwendet wird, das eine Synchronisation einer in einer anderen Erzeugereinheit (12, 14, 16, 18) erzeugten Wechselspannung mit der in der ersten Erzeugereinheit (12) erzeugten Wechselspannung ermöglicht, indem dem Synchronisationssignal (32) eine feste Phasenlage in der Wechselspannung zugeordnet wird und das Synchronisationssignal (32) mit der Frequenz der Wechselspannung oder einem ganzzahligen Teil dieser Frequenz wiederholt wird, oder indem das Synchronisationssignal (32) die Phasenlage in der Wechselspannung als kodierte Daten enthält, und
- die zweite Erzeugereinheit (14, 16, 18) die Phasenlage der erzeugten Wechselspannung an das Synchronisationssignal (32) so anpasst, dass die Phasenlage des Synchronisationssignals der festen Phasenlage oder der als kodierte Daten übertragenen Phasenlage in der Wechselspannung entspricht.

13. Betriebsverfahren für ein elektrisches Energieverteilnetz, bei dem
- eine Mehrzahl von ein- oder mehrphasigen Erzeugereinheiten (12, 14, 16, 18) an das Energieverteilnetz (10) angeschlossen sind und elektrische Energie einspeisen,
- eine Einrichtung ein Synchronisationssignal (32) auf den Spannungsverlauf aufmoduliert, wobei ein Synchronisationssignal (32) verwendet wird, dem eine feste Phasenlage in der Wechselspannung zugeordnet wird, wobei das Synchronisationssignal (32) mit der Frequenz der Wechselspannung oder einem ganzzahligen Teil dieser Frequenz wiederholt wird, oder das die Phasenlage in der Wechselspannung als kodierte Daten enthält, und
- wenigstens ein Teil der Erzeugereinheiten nach Anspruch 12 die Phasenlage der von ihnen erzeugten Wechselspannung basierend auf dem Synchronisationssignal (32) so festlegen, dass die Phasenlage des Synchronisationssignals (32) der festen Phasenlage oder der als kodierte Daten übertragenen Phasenlage in der Wechselspannung entspricht.

14. Betriebsverfahren nach Anspruch 13, bei dem als Einrichtung eine Erzeugereinheit nach Anspruch 1 verwendet wird.
